# EUROPÄISCHE PATENTANMELDUNG

(11) **EP 0 580 174 A1**
(43) Veröffentlichungstag der Anmeldung: **26.01.1994**
(21) Anmeldenummer: 93111878.0
(22) Anmeldetag: 23.07.1993
(51) Int. Cl.: H04M 1/72

(54) **Tischhalterung für ein Funktelefon**

(30) Priorität: 23.07.1992 DE 9209947 U
(71) Anmelder: SIEMENS AKTIENGESELLSCHAFT, D-80333 München (DE)
(72) Erfinder: Heiss, Reinhold, Dipl.-Ing., D-82061 Neuried (DE)

(57) **Zusammenfassung**

Die Erfindung betrifft ein Funktelefon, bestehend aus einem annähernd quaderförmigen Aufnahmekörper, bei dem im oberen Teil eine sich in Längsrichtung erstreckende und an einer schmalen Seite offene Aufnahmemulde angeordnet ist.
An der Rückseite des Aufnahmekörpers (1) ist eine um eine quer zur Längsrichtung der Tischhalterung gelegene Achse schwenkbare Klappe (4) angeordnet, um während des aktiven Betriebs gute Empfangseigenschaften und eine gute Bedienbarkeit zu ermöglichen.

## Beschreibung

Die Erfindung betrifft eine Tischhalterung für ein Funktelefon, bestehend aus einem annähernd quarderförmigen Aufnahmekörper, bei dem im oberen Teil eine sich in Längsrichtung erstreckende und an einer schmalen Seite offene Aufnahmemulde angeordnet ist.

Derartige Halterungen sind als Ladeschalen für schnurlose Telefone bekannt und liegen normalerweise flach auf einer Unterlage, z.B. einer Tischfläche. Diese Lage ist für Halterungen für Funktelefone von großem Nachteil, da in diesem Fall die eingebaute Antenne parallel zur Erdoberfläche ausgerichtet ist, was sehr schlechte Empfangsbedingungen zur Folge hat.

Aufgabe der vorliegenden Erfindung ist es, eine Tischhalterung der eingangs genannten Art anzugeben, die während des aktiven Betriebs des Funktelefons gute Empfangseigenschaften gewährleistet und gleichzeitig eine gute Bedienbarkeit des Telefons während eines stationären Tischbetriebs ermöglicht.

Diese Aufgabe wird erfindungsgemäß für eine Tischhalterung der eingangs genannten Art dadurch gelöst, daß an der Rückseite des Aufnahmekörpers eine um eine quer zur Längsrichtung der Aufnahmevorrichtung gelegene Achse schwenkbare Klappe angeordnet ist.

Dadurch ist es möglich, das Funktelefon im stationären Betrieb in eine Schräglage zu bringen. Hierdurch verbessern sich die Empfangseigenschaften des Funktelefons erheblich, gleichzeitig wird die Bedienung des Funktelefons erleichtert.

Eine besonders leichte Bedienbarkeit der schwenkbaren Klappe ergibt sich dadurch, daß die Achse im mittleren Bereich des Aufnahmekörpers angeordnet ist, und daß die schwenkbare Klappe in verschiedenen Stellungen einrastbar ist.

Eine andere zweckmäßige Ausgestaltung der erfindungsgemäßen Tischhalterung ist dadurch gekennzeichnet, daß in der schwenkbaren Klappe auf der dem Aufnahmekörper zugewandten Seite ein Lautsprecher eingebaut ist. Somit ermöglicht die Tischhalterung in Verbindung mit dem Funktelefon ein Lauthören und über das eingebaute Mikrofon des Funktelefons gleichzeitig auch ein Freisprechen.

Eine weitere zweckmäßige Weiterbildung der erfindungsgemäßen Tischhalterung ist dadurch gekennzeichnet, daß die Außenseite der schwenkbaren Klappe im eingeklappten Zustand mit der Rückwand des Aufnahmekörpers bündig abschließt, so daß die Tischhalterung auch mit eingeklappter Klappe gut zu handhaben ist.

Anhand eines in der Zeichnung dargestellten beispielhaften Ausführungsbeispiels einer Tischhalterung gemäß der vorliegenden Erfindung soll diese nachfolgend näher erläutert werden.

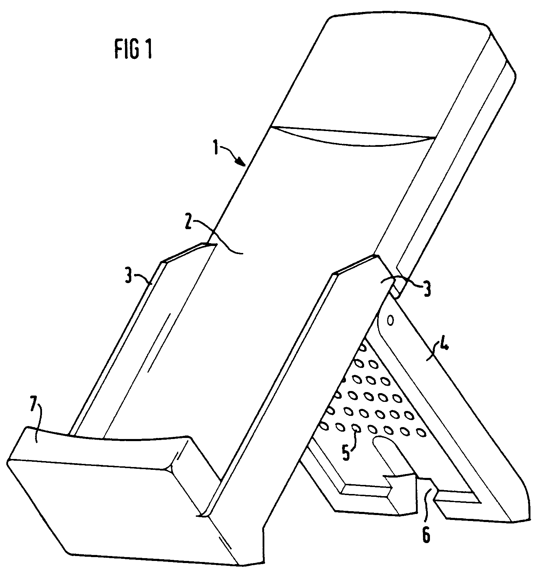

Es zeigen
- FIG 1: eine perspektivische Darstellung einer Tischhalterung gemäß der vorliegenden Erfindung von vorne, und

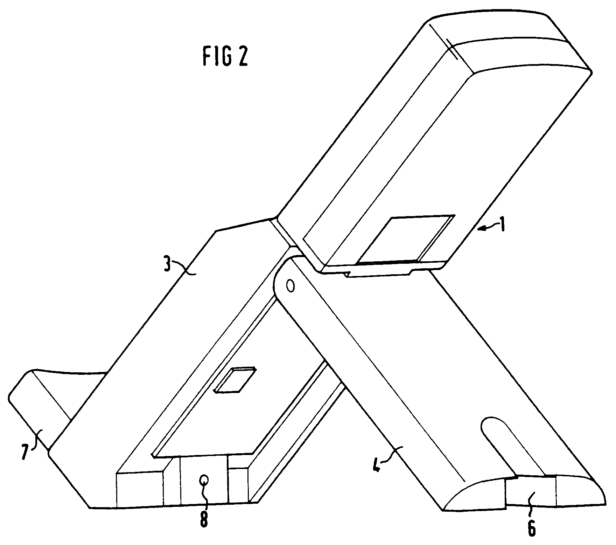

- FIG 2: eine perspektivische Darstellung der in FIG 1 dargestellten Tischhalterung von hinten.

Die Tischhalterung besteht im wesentichen aus dem Aufnahmekörper 1 und der Aufnahmemulde 2, die von den Seitenwänden 3 begrenzt ist. Im Fußteil 7 des Aufnahmekörpers 1 befinden sich in der FIGUR nicht dargestellte Ladekontakte für das Funktelefon.

Auf der Rückseite weist die erfindungsgemäße Tischhalterung eine schwenkbare Klappe 4 auf. Diese Klappe ist um eine im mittleren Bereich des Aufnahmekörpers 1 angeordnete Achse schwenkbar und in verschiedenen Stellungen einrastbar. Dabei ist die Klappe zweckmäßigerweise derart ausgebildet, daß sie in ihrer Endstellung eine um 60° gekippte Lage des Funktelefons ermöglicht. In der schwenkbaren Klappe 4 ist ein Lautsprecher 5 für den Tonruf und zum Lauthören integriert. Bei aufgestellter Klappe ergeben sich gute Abstrahleigenschaften. Weiterhin ist die schwenkbare Klappe 4 mit einem Einschnitt 6 versehen. Dieser dient dazu, daß im eingeklappten Zustand eine Buchse 8 für die Stromversorgung der Ladestahle zugänglich ist.

## Patentansprüche

1. Tischhalterung für ein Funktelefon, bestehend aus einem annähernd quaderförmigen Aufnahmekörper, bei dem im oberen Teil eine sich in Längsrichtung erstreckende und an einer schmalen Seite offene Aufnahmemulde angeordnet ist,
**dadurch gekennzeichnet,**
daß an der Rückseite des Aufnahmekörpers 1 eine um eine quer zur Längsrichtung der Tischhalterung gelegene Achse schwenkbare Klappe 4 angeordnet ist.

2. Tischhalterung nach Anspruch 1,
**dadurch gekennzeichnet,**
daß die Achse im mitteleren Bereich der Tischhalterung 1 angeordnet ist.

3. Tischhalterung nach Anspruch 1,
**dadurch gekennzeichnet,**
daß die schwenkbare Klappe 4 in verschiedenen Stellungen einrastbar ist.

4. Tischhalterung nach Anspruch 1,
**dadurch gekennzeichnet,**
daß in der schwenkbaren Klappe auf der dem Aufnahmekörper zugewandten Seite ein Lautsprecher 5 eingebaut ist.

5. Tischhalterung nach einem der vorhergehenden Ansprüche,
**dadurch gekennzeichnet,**
daß die Außenseite der schwenkbaren Klappe 4 im eingeklappten Zustand mit der Rückwand des Aufnahmekörpers 1 bündig abschließt.
